# EUROPÄISCHE PATENTSCHRIFT

(11) **EP 2 834 532 B1**
(45) Veröffentlichungstag und Bekanntmachung des Hinweises auf die Patenterteilung: **04.11.2015**
(21) Anmeldenummer: 13735016.1
(22) Anmeldetag: 09.07.2013
(51) Int. Cl.: F16D 65/092

(54) **BELAGTRÄGERPLATTE FÜR EINEN BREMSBELAG**
LINING CARRIER PLATE FOR A BRAKE LINING
PLAQUE DE SUPPORT DE GARNITURE POUR UNE GARNITURE DE FREIN

(30) Priorität: 10.07.2012 DE 102012106162
(43) Veröffentlichungstag der Anmeldung: 11.02.2015
(73) Patentinhaber: TMD Friction Services GmbH, 51381 Leverkusen (DE)
(72) Erfinder: STENKAMP, Axel, 53171 Bonn (DE); SAKAGUCHI, Dai-Victor, 63584 Gründau (DE)
(74) Vertreter: Müller, Eckhard
(86) Internationale Anmeldenummer: PCT/EP2013/064458
(87) Internationale Veröffentlichungsnummer: WO 2014/009352

(56) Entgegenhaltungen:
- DE-A1-102005 048 109
- US-A1- 2004 099 493
- US-A1- 2006 124 405
- US-A1- 2012 000 735

## Beschreibung

Die Erfindung betrifft eine Belagträgerplatte einer Bremsbacke, welche zur Halterung eines Reibbelages ausgebildet ist.

Belagträgerplatten für Bremsbacken der eingangs genannten Art sind im Stand der Technik bekannt. Der Aufbau von Belagträgerplatten, insbesondere von solchen für Bremsbacken von Schreibenbremsen, ist in seiner Grundstruktur häufig ähnlich. Auf einer entsprechenden Belagträgerplatte wird ein Reibbelag aufgebracht, beispielsweise mittels einer Klebeschicht.

Der Reibbelag tritt beim Bremsen in reibenden Kontakt mit einer Bremsscheibe oder einer Bremstrommel und setzt dabei kinetische Energie in Wärmeenergie um. Durch die Temperaturerhöhung dehnen sich Bremsscheibe und Bremsbacken aus und verformen sich unter Umständen auch, was neben Veränderungen der Reibeigenschaften der Reibpartner durch die Temperaturerhöhung durch die veränderten Druckverteilung einen zusätzlichen Einfluss auf das Bremsverhalten hat.

So wurde bei herkömmlichen Scheibenbremsen festgestellt, dass sich unerwünschtermaßen kleine Bereiche hoher Temperatur bilden können, sog. hot spots, über die ein zu hoher Anteil des Bremsdruckes auf vergleichsweise kleiner Fläche aufgebracht wird. Mögliche Folgen sind erhöhter Verschleiß, Bremsenquietschen und geringere Gesamtbremsleistung.

Aus der DE 10 2005 048 109 A1 ist eine Bremsbacke für eine Scheibenbremse bekannt, die einen Träger aufweist, der auf einer dem Kolben eines Bremszylinders zugekehrten Seite einen wärmedämmenden, porösen Druckübertragungskörper aus mit Kunstharz gebundenen Fasern für den Kolben aufweist. Der Druckübertragungskörper ist in eine Ausnehmung des Trägers für den Bremsbelag eingesetzt. Der Druckübertragungskörper ist aus gegossenem Fasermaterial hergestellt. Damit soll die Wärmeübertragung auf die Bremsflüssigkeit reduziert werden.

Die DE 20 2009 012 778 U1 offenbart eine Verbundbremsklotzsohle und einen Verbundbremsklotz, wobei die Verbundbremsklotzsohle einen plattenförmigen Grundkörper mit einer Tragfläche auf einer Innenseite für eine Kunststoffmasse des Verbundbremsklotzes aufweist, wobei der Grundkörper wenigstens eine Stahleinlage aufweist. Die Stahleinlage ist im Wesentlichen über die gesamte Länge des Grundkörpers erstreckt und weist einen nicht rechteckförmigen Querschnitt, vorzugsweise einen kreisförmigen Querschnitt auf.

Die DE 10 2008 024 194 A1 offenbart eine Bremsbelagbaugruppe für Fahrradscheibenbremsen mit einem Reibungsbremsbelag und einer Rückenplatte. Die Rückenplatte beinhaltet eine erste Schicht, die auf dem Reibungsbremsbelag abgelagert ist, und eine zweite Schicht, die auf der ersten Schicht abgelagert ist. Die erste Schicht besteht aus einer Aluminiumlegierung und die zweite Schicht aus rostfreiem Edelstahl. Die Rückenplatte weist eine Dicke von ca. 1,7 bis 1,8 mm auf.

Aus der US 2012/0000735 A1 ist eine Bremsbacke mit Kühlflächen für eine Fahrradbremse bekannt. Die Kühlplatte weist Abschnitte mit Kühlrippen zur Wärmeableitung auf. Ein Bremsbelag mit einer Bremsbelagoberfläche ist mechanisch an einem Befestigungsbereich der Kühlplatte befestigt. Der Bremsbelag besteht aus einem Reibbelag, der auf einer Belagträgerplatte starr und fest zu einem monolithischen Element verbunden ist. Der Befestigungsbereich besteht aus einem gut wärmeleitenden Metall, bevorzugt aus Messing, Aluminium oder legiertem Stahl. Der Bremsbeleg weist Nietabschnitte zur Befestigung an die Kühlplatte und an eine Befestigungsplatte auf.

Aus der US 2004/0099493 A1 ist ein Reibbelag für Scheibenbremsen für Straßen- und Schienenfahrzeuge bekannt, welcher eine Trägerplatte aus Stahl mit einem dünnwandigen Rauhgrundträger aus einem Metallblech und eine Zwischenschicht mit darauf befestigten Funktionsblock aus einem Reibmaterial aufweist. Der Reibbelagträger ist mit mindestens einer fensterartigen Durchbrechung versehen. In diese Durchbrechung kann ein Füll- oder Dämmmaterial eingesetzt werden, bevorzugt ein Kunststoff. Zur Erhöhung bzw. Verbesserung des Wärmeflusses sind metallische Füll- bzw. Dämmmaterialien vorgesehen. Ebenfalls ist vorgesehen, dass Abschnitte des Rauhgrundträgers in die fensterartigen Durchbrechungen eingedrückt werden. Es kann ein zusätzliches Verschweißen des Rauhgrundträgers mit dem Reibbelagträger erfolgen.

Aus der US 2006/0124405 A1 ist eine pneumatisch und/oder elektromotorisch betätigbare Scheibenbremse bekannt mit einem eine Bremsscheibe übergreifenden Bremssattel, mindestens einer im Bremssattel angeordneten Nachstelleinrichtung zum Ausgleich von Bremsbelag- und/oder Bremsscheibenverschleiß durch Verstellen des Abstandes zwischen wenigstens einem Bremsbelag und der Bremsscheibe, die zwei axial bewegbare Nachstellelemente mit jeweils einem Druckstück umfasst. Die beiden Nachstellelemente der Nachstelleinrichtung sind verdrehsicher in ihrem zum jeweiligen Bremsbelag weisenden Bereich an einer gemeinsamen Verbindungsplatte befestigt. An der Verbindungsplatte und/oder am Druckstück auf der dem jeweiligen Bremsbelag zugewandten Seite ist zumindest bereichsweise eine ein- oder mehrteilige wärmeisolierende Schicht angebracht.

Aufgabe der vorliegenden Erfindung ist es, eine Belagträgerplatte der eingangs genannten Art dahingehend weiterzubilden, dass sie ein optimiertes Heißbremsverhalten aufweist.

Die Aufgabe wird gelöst durch eine Belagträgerplatte gemäß Anspruch 1. Weitere Ausgestaltungen der Erfindung sind Gegenstand der Unteransprüche.

Eine erfindungsgemäße Belagträgerplatte einer Bremsbacke, welche zur Halterung eines Reibbelages ausgebildet ist, weist einen ersten Teil aus einem ersten Metall mit einem ersten Wärmeausdehnungsverhalten und wenigstens einen mit dem ersten Teil mechanisch verbundenen zweiten Teil aus einem zweiten Metall mit einem zweiten Wärmeausdehnungsverhalten auf, wobei das erste Wärmeausdehnungsverhalten und das zweite Wärmeausdehnungsverhalten der jeweiligen Metalle unterschiedlich sind.

Geeignete erste und zweite Materialien sind Stahl und Titanium. So liegt die Wärmedehnung von Stahl im Bereich von 11 bis 25 *10-6 K-1 und die von Titanium bei 9 * 10-6 K-1.

Der Reibbelag kann auf der Belagträgerplatte durch übliche Befestigungsmaßnahmen befestigt werden, beispielsweise durch Kleben oder vulkanisieren. Die Belagträgerplatte kann beliebige Außenkonturen aufweisen, wie sie von unterschiedlichen Bremsensystemen erforderlich sind. Möglich ist eine Ausgestaltung als Hammerkopfplatte oder bekannte sogenannte Push-Geometrie.

Durch die mechanische Verbindung des ersten Teils und des zweiten Teils und durch die unterschiedlichen Wärmeausdehnungsverhalten des ersten Teils und des zweiten Teils kann bei Erwärmung der erfindungsgemäßen Belagträgerplatte eine gezielte Verformung der Belagträgerplatte und damit einer entsprechend ausgestatteten Bremsbacke erreicht werden, so dass sich die Druckverteilung des Bremsdruckes einer entsprechend ausgestatteten Scheibenbremse im Heißbremsfalle gezielt beeinflussen lässt. Unerwünschte undefinierte Temperatur- und Belastungsspitzen können mit Hilfe einer erfindungsgemäßen Belagträgerplatte vermieden werden.

Statt zweier Teile unterschiedlicher Wärmeausdehnungsverhalten können auch mehrere Teile vorgesehen sein, die jeweils mechanisch miteinander verbunden sind. Diese mehreren Teile können aus zwei oder mehreren unterschiedlichen Metallen bestehen, um das Wärmeausdehnungsverhalten der Belagträgerplatte gezielt zu beeinflussen.

Erfindungsgemäß ist vorgesehen, dass der erste Teil in den zweiten Teil eingelassen ist. Auf diese Weise kann beispielsweise erreicht werden, dass die Kontaktfläche zum Reibbelag aus einem Metall besteht, wodurch lokale Kraftspitzen auf den Reibbelag durch die unterschiedlichen Wärmeausdehnungsverhalten, beispielsweise durch Scherkräfte, verhindert werden können.

Gemäß einer ersten möglichen Ausgestaltung der Erfindung kann vorgesehen sein, dass der erste Teil und der zweite Teil stoffschlüssig miteinander verbunden sind. Dies kann beispielsweise durch Schweißen oder Kleben erreicht werden. Eine derartige stoffschlüssige Verbindung der beiden Teile ermöglicht eine großflächige Kraftübertragung während der Verformung.

Gemäß einer alternativen Ausgestaltung der erfindungsgemäßen Belagträgerplatte kann vorgesehen sein, dass der erste Teil und der wenigstens eine zweite Teil aneinander festgelegt sind. Ein solches Festlegen kann durch Pressen, Crimpen, Nieten, Schrauben oder durch andere bekannte Festlegungsmittel geschehen. Mit Hilfe einer derartigen Festlegung lässt sich der Fertigungsaufwand reduzieren.

Gemäß einer weiteren möglichen Ausgestaltung der Erfindung kann vorgesehen sein, dass das Metall des ersten Teils einen größeren Wärmeausdehnungskoeffizienten als das Metall des zweiten Teils aufweist. Bei Erwärmung der Belagträgerplatte wird somit erreicht, dass sich der erste Teil stärker ausdehnt als der zweite Teil, wodurch in Verbindung mit später beschriebenen geeigneten Geometrien geeignete Verformungen zur Bewerkstelligung gewünschter Effekte erzielt werden können.

Gemäß einer weiteren möglichen Ausgestaltung der Erfindung kann vorgesehen sein, dass der erste Teil und der zweite Teil in Druckrichtung betrachtet hintereinander angeordnet sind. Auf diese Weise wird eine Verformung der Außenbereiche der Belagträgerplatten quer zur Druckrichtung, in Druckrichtung oder von der Druckrichtung weg erreicht, so dass sich je nach benötigtem Anwendungsfall eine Biegung der Belagträgerplatte derart erreichen lässt, dass der Reibbelag an den Kanten stärker oder weniger stark an dem Reibpartner, beispielsweise einer Scheibenbremse, reibt. Gemäß einer weiteren möglichen Ausgestaltung der Erfindung kann vorgesehen sein, dass der erste Teil als mechanisch verbundener Einsatz in den zweiten Teil ausgebildet ist. Auf diese Weise kann eine gezielte Verformung der Belagträgerplatte abhängig von der Geometrie des Einsatzes erreicht werden.

Gemäß einer weiteren möglichen Ausgestaltung der Erfindung kann vorgesehen sein, dass der erste Teil längs zur Druckrichtung innenliegend angeordnet ist, sodass der erste Teil auf einer dem Reibbelag abgewandten Seite angeordnet ist.

Ein erster unabhängiger Gegenstand der Erfindung betrifft eine Bremsbacke mit einem Reibbelag und einer Belagträgerplatte gemäß dem zuvor beschriebenen Erfindungsgedanken.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen.

Die Erfindung wird anhand eines Ausführungsbeispiels erläutert. Dabei zeigen schematisch:
- Fig. 1A, B: eine Draufsicht und eine perspektivische Ansicht auf eine erfindungsgemäße Belagträgerplatte;
- Fig. 2: eine Ansicht der Hochtemperaturdruckverteilung eines herkömmlichen Reibbelages sowie
- Fig. 3: eine Ansicht einer Hochtemperaturdruckverteilung eines Reibbelages einer erfindungsgemäßen Bremsbacke.

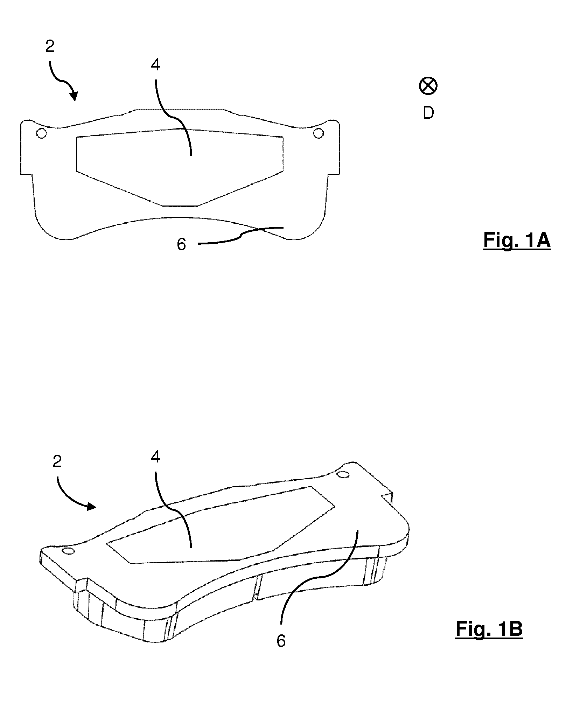

Figuren 1A und 1B zeigen eine Draufsicht (Figur 1 A) und eine perspektivische Ansicht (Figur 1 B) auf eine erfindungsgemäße Belagträgerplatte 2.

Die Belagträgerplatte 2 weist zwei Teile 4, 6 aus zwei unterschiedlichen Metallen, Teil 6 aus Titanium und Teil 4 aus Stahl auf, welche mechanisch miteinander verbunden sind. Der erste Teil 4 ist in den zweiten Teil 6 eingesetzt und im dargestellten Ausführungsbeispiel verschweißt.

Das erste Teil 4 weist einen größeren Wärmeausdehnungskoeffizienten auf als das zweite Teil 6. Das erste Teil 4 ist vorliegend dreieckig, insbesondere gleichschenklig dreieckig ausgebildet. Andere Geometrien sind im Rahmen der Erfindung ebenfalls denkbar, beispielsweise rechteckige bzw. streifenartige Ausgestaltungen.

In dem dargestellten Ausführungsbeispiel ist das erste Teil 4 in Druckrichtung D durchragend ausgestaltet, es kann jedoch auch als Einsatzteil ausgebildet sein, welches nur auf einer Seite der erfindungsgemäßen Belagträgerplatte 2 angeordnet ist.

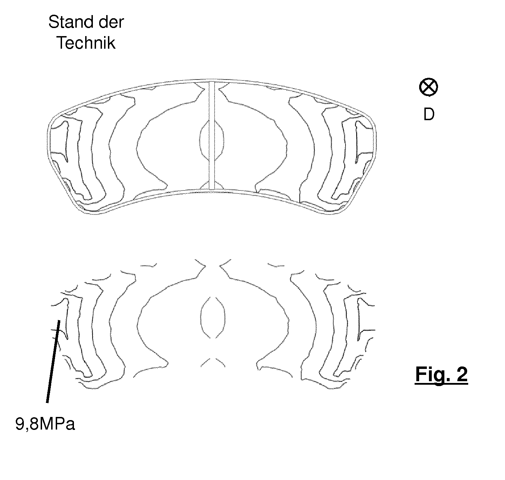

Figur 2 zeigt einen herkömmlichen Reibbelag nach dem Stand der Technik, sein Wärmeausdehnungsverhalten (obere Darstellung) sowie die daraus resultierende Druckverteilung (untere Darstellung).

Die Wärmeausdehnung der herkömmlichen Bremsbacke ist in den Randbereichen quer zur Druckrichtung D am größten und führt somit zu Druckverteilungen mit im dargestellten Ausführungsbeispiel Druck maximal in Höhe von 9,2 Megapascal in den Randbereichen.

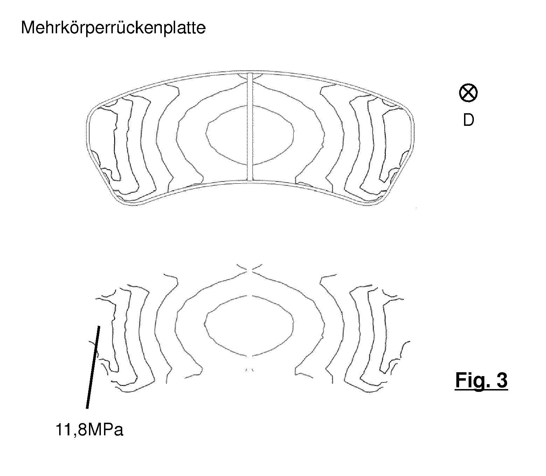

Bei einem erfindungsgemäßen Belagträger, wie er in Figur 3 dargestellt ist, ist durch die Verwendung einer wenigstens zweiteiligen Belagträgerplatte eine stärkere Verformung in den Randbereichen gegeben, so dass sich hier bei ansonsten gleichen Randbedingungen wie bei dem Ausführungsbeispiel in Figur 2 Druck maximal von 9,5 Megapascal erreichen lassen.

### Bezugszeichenliste

- 2: Belagträgerplatte
- 4: erstes Teil
- 6: zweites Teil
- D: Druckrichtung

## Patentansprüche

1. Belagträgerplatte (2) einer Bremsbacke, welche zur Halterung eines Reibbelages ausgebildet ist, wobei die Belagträgerplatte (2) einen ersten Teil (4) aus einem ersten Metall mit einem ersten Wärmeausdehnungsverhalten und wenigstens einen mit dem ersten Teil (4) mechanisch verbundenen zweiten Teil (6) aus einem zweiten Metall mit einem zweiten Wärmeausdehnungsverhalten aufweist, wobei das erste Wärmeausdehnungsverhalten und das zweite Wärmeausdehnungsverhalten unterschiedlich sind, wobei der erste Teil (4) als mechanisch verbundener Einsatz in den zweiten Teil (6) ausgebildet ist und dass der erste Teil (4) den zweiten Teil (6) durchragt, **dadurch gekennzeichnet, dass** der erste Teil (4) in den zweiten Teil (6) eingelassen ist.

2. Belagträgerplatte nach Anspruch 1, **dadurch gekennzeichnet, dass** der erste Teil (4) und der zweite Teil (6) stoffschlüssig miteinander verbunden sind.

3. Belagträgerplatte nach Anspruch 1, **dadurch gekennzeichnet, dass** der erste Teil (4) und der zweite Teil (6) aneinander festgelegt sind.

4. Belagträgerplatte nach einem der vorangegangenen Ansprüche, **dadurch gekennzeichnet, dass** das Metall des ersten Teils (4) einen größeren Wärmeausdehnungskoeffizienten als das Metall des zweiten Teils (6) aufweist.

5. Belagträgerplatte nach einem der vorangegangenen Ansprüche, **dadurch gekennzeichnet, dass** der erste Teil (4) und der zweite Teil (6) in Druckrichtung (D) hintereinander angeordnet sind.

6. Belagträgerplatte nach einem der vorangegangenen Ansprüche, **dadurch gekennzeichnet, dass** der erste Teil (4) längs zur Druckrichtung (D) innenliegend angeordnet ist.

7. Bremsbacke, mit einem Reibbelag und einer Belagträgerplatte (2) gemäß einem der vorangegangenen Ansprüche.

## Claims

1. Lining carrier plate (2) of a brake shoe, which lining carrier plate (2) is configured for holding a friction lining, the lining carrier plate (2) having a first part (4) made from a first metal with a first thermal expansion behaviour and at least one second part (6) which is connected mechanically to the first part (4) and is made from a second metal with a second thermal expansion behaviour, the first thermal expansion behaviour and the second thermal expansion behaviour being different, the first part (4) being configured as a mechanically connected insert into the second part (6), and the first part (4) protruding through the second part (6), **characterized in that** the first part (4) is let into the second part (6).

2. Lining carrier plate according to claim 1, **characterized in that** the first part (4) and the second part (6) are connected to one another in an integrally joined manner.

3. Lining carrier plate according to claim 1, **characterized in that** the first part (4) and the second part (6) are fixed to one another.

4. Lining carrier plate according to one of the preceding claims, **characterized in that** the metal of the first part (4) has a greater coefficient of thermal expansion than the metal of the second part (6).

5. Lining carrier plate according to one of the preceding claims, **characterized in that** the first part (4) and the second part (6) are arranged one behind another in the pressure direction (D).

6. Lining carrier plate according to one of the preceding claims, **characterized in that** the first part (4) is arranged so as to lie on the inside longitudinally with respect to the pressure direction (D).

7. Brake shoe, having a friction lining and a lining carrier plate (2) according to one of the preceding claims.

## Revendications

1. Plaque de support de garniture (2) pour une mâchoire de frein, qui est réalisée pour la fixation d'une garniture de friction, la plaque de support de garniture (2) présentant une première partie (4) en un premier métal ayant un premier comportement de dilatation thermique et au moins une deuxième partie (6) connectée mécaniquement à la première partie (4) en un deuxième métal ayant un deuxième comportement de dilatation thermique, le premier comportement de dilatation thermique et le deuxième comportement de dilatation thermique étant différents, la première partie (4) étant réalisée sous forme d'insert connecté mécaniquement dans la deuxième partie (6) et la première partie (4) traversant la deuxième partie (6), **caractérisée en ce que** la première partie (4) est incorporée dans la deuxième partie (6).

2. Plaque de support de garniture selon la revendication 1, **caractérisée en ce que** la première partie (4) et la deuxième partie (6) sont connectées l'une à l'autre par engagement par liaison de matière.

3. Plaque de support de garniture selon la revendication 1, **caractérisée en ce que** la première partie (4) et la deuxième partie (6) sont fixées l'une à l'autre.

4. Plaque de support de garniture selon l'une quelconque des revendications précédentes, **caractérisée en ce que** le métal de la première partie (4) présente un coefficient de dilatation thermique supérieur à celui du métal de la deuxième partie (6).

5. Plaque de support de garniture selon l'une quelconque des revendications précédentes, **caractérisée en ce que** la première partie (4) et la deuxième partie (6) sont disposées l'une derrière l'autre dans la direction de pression (D).

6. Plaque de support de garniture selon l'une quelconque des revendications précédentes, **caractérisée en ce que** la première partie (4) est disposée à l'intérieur longitudinalement par rapport à la direction de pression (D).

7. Mâchoire de frein comprenant une garniture de friction et une plaque de support de garniture (2) selon l'une quelconque des revendications précédentes.
